# EUROPÄISCHE PATENTSCHRIFT

(11) **EP 1 470 408 B1**
(45) Veröffentlichungstag und Bekanntmachung des Hinweises auf die Patenterteilung: **15.12.2010**
(21) Anmeldenummer: 02782685.8
(22) Anmeldetag: 23.09.2002
(51) Int. Cl.: G01N 11/16, G01N 9/00

(54) **VORRICHTUNG ZUR MESSUNG DER VISKOSITÄT UND/ODER DER DICHTE**
DEVICE FOR MEASURING VISCOSITY AND/OR DENSITY
DISPOSITIF DE MESURE DE VISCOSITE ET/OU DE DENSITE

(30) Priorität: 18.01.2002 DE 10203475
(43) Veröffentlichungstag der Anmeldung: 27.10.2004
(73) Patentinhaber: ROBERT BOSCH GMBH, 70442 Stuttgart (DE)
(72) Erfinder: JAKOBY, Bernhard, A-1180 Wien (AT); ARTZNER, Johannes, 72764 Reutlingen (DE)
(86) Internationale Anmeldenummer: PCT/DE2002/003565
(87) Internationale Veröffentlichungsnummer: WO 2003/060482

(56) Entgegenhaltungen:
- WO-A-00/25118
- US-A- 4 023 400
- US-A- 4 783 987
- US-A- 4 788 466
- US-A- 5 054 313
- US-A- 5 416 448
- US-A- 5 741 961
- BARNES C: "DEVELOPMENT OF QUARTZ CRYSTAL OSCILLATORS FOR UNDER-LIQUID SENSING" SENSORS AND ACTUATORS A, ELSEVIER SEQUOIA S.A., LAUSANNE, CH, Bd. A29, Nr. 1, 1. September 1991 (1991-09-01), Seiten 59-69, XP000324266 ISSN: 0924-4247
- CHAGNARD C ET AL: "AN ELECTRONIC OSCILLATOR WITH AUTOMATIC GAIN CONTROL: EQCM APPLICATIONS" SENSORS AND ACTUATORS B, ELSEVIER SEQUOIA S.A., LAUSANNE, CH, Bd. B32, Nr. 2, 1. Mai 1996 (1996-05-01), Seiten 129-136, XP000636389 ISSN: 0925-4005

## Beschreibung

### Stand der Technik

Die Erfindung geht aus von einer Vorrichtung zur Messung der Dichte und/oder der Viskosität eines Fluids nach der Gattung des Hauptanspruchs.

Aus der DE 19850803 ist bereits eine Sensoranordnung und ein Verfahren zur Ermittlung der Dichte und der Viskosität einer Flüssigkeit bekannt, wobei die Verwendung wenigstens einer Oszillationsschaltung vorgeschlagen wird.

Die US 5 054 313 offenbart eine Vorrichtung zur Messung der Viskosität eines Fluids mittels eines zu mechanischen schwingungen fähigen Schwingens, wobei eine Oszillatorschaltung mit einem ersten und einem zweiten Rückkopplungsnetzwerk vorgesehen ist, um eine konstante Amplitude der mechanischen Oszillation des Sensors zu ermöglichen.

### Vorteile der Erfindung

Die erfindungsgemäße Vorrichtung mit den Merkmalen des Hauptanspruchs hat den Vorteil, dass eine Kompensationsmöglichkeit für Effekte geschaffen wird, die das Messergebnis beeinträchtigen.

Durch die in den Unteransprüchen aufgeführten Maßnahmen sind vorteilhafte Weiterbildungen und Verbesserungen der im Hauptanspruch angegebenen Vorrichtung möglich.

Erfindungsgemäß ist das erste Rückkopplungsnetzwerk entsprechend einem, einen als Sensorelement fungierenden Resonator als frequenzbestimmendes Element aufweisendes Rückkopplungsnetzwerk vorgesehen und das zweite Rückkopplungsnetzwerk entsprechend einem, eine Korrekturkapazität als frequenzbestimmendes Element aufweisendes Rückkopplungsnetzwerk. Dadurch ist es möglich, dass bei der Messung der Viskosität von hochviskosen Flüssigkeiten eine im wesentlichen zu der Meßimpedanz parallelliegende Kapazität, beispielsweise in Form von Streukapazitäten, kompensierbar ist. Hierdurch wird in vorteilhafter Weise erreicht, dass eine Kompensation der parallelliegenden Kapazität möglich ist, ohne zur Kompensation auf Bauteile mit schlechtem, d.h. großem, Temperaturkoeffizienten bzw. mit schlechten Drifteigenschaften, wie beispielsweise induktive Bauelemente, zurückgreifen zu müssen.

Weiterhin ist von Vorteil, dass die Vorrichtung einen Verstärker aufweist, dass der Verstärker einen ersten Eingang aufweist und dass dem ersten Eingang des Verstärkers ein Ausgang des ersten Rückkopplungsnetzwerk und ein Ausgang des zweiten Rückkopplungsnetzwerk zugeführt ist, wobei dem ersten Eingang des Verstärkers die Differenz der Ausgänge der Rückkopplungsnetzwerke zugeführt ist. Hierdurch ist auf einfache Weise die Kompensation der parallelliegenden Kapazitäten möglich, indem die Korrekturkapazität in etwa so groß gewählt wird wie die zu korrigierende und parallelliegenden Kapazitäten.

### Zeichnung

Ein Ausführungsbeispiel der Erfindung ist in der Zeichnung dargestellt und in der nachfolgenden Beschreibung näher erläutert. Es zeigen
Figur 1 ein Ersatzschaltbild eines Quarzresonators in der Umgebung der Resonanzfrequenz,
Figur 2 ein Blockschaltbild der vorgeschlagenen Oszillatorschaltung und
Figur 3 eine schematische Darstellung einer Messanordnung mit einer erfindungsgemäßen Vorrichtung.

### Beschreibung des Ausführungsbeispiels

Es ist bereits allgemein bekannt, zur Viskositäts- und oder Dichtemessung piezoelektrische Schwinger, insbesondere Dickenscherschwinger und insbesondere aus Quarz, zu verwenden. Wird ein solcher Dickenscherschwinger in eine viskose Flüssigkeit getaucht, so ändern sich die Resonanzfrequenz der Eigenschwingung und deren Dämpfung in Abhängigkeit der Viskosität und der Dichte der Flüssigkeit.

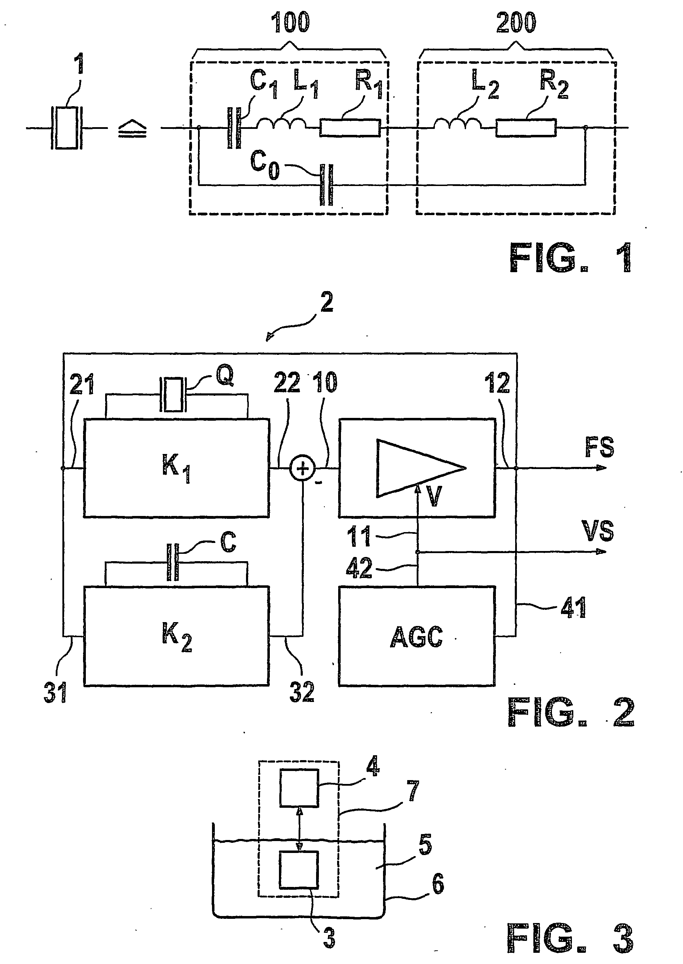

Der Einfachheit halber folgt zunächst die Beschreibung der Figur 3. In Figur 3 ist eine schematische Darstellung einer Messanordnung mit einer erfindungsgemäßen Vorrichtung dargestellt. In einem Behälter 6 befindet sich ein Fluid 5, erfindungsgemäß insbesondere eine Flüssigkeit 5. In die Flüssigkeit 5 bzw. das Fluid 5 ist der mit dem Bezugszeichen, 3 bezeichnete Schwinger eingetaucht. Der Schwinger 3 ist mit einer Regelungs- und Auswerteeinheit 4 verbunden, welche über nicht dargestellte drahtgebundene oder nicht drahtgebundene Kanäle die Messergebnisse bzgl. der zu messenden Größen der Flüssigkeit 5 weiterzuleiten imstande ist. Der Schwinger 3 und die Regelungs- und Auswerteeinheit 4 bilden zusammen die erfindungsgemäße und mit dem Bezugszeichen 7 bezeichnete Vorrichtung zur Messung der Viskosität und/oder der Dichte einer Flüssigkeit. Dies ist in Figur 3 durch eine mittels einer gestrichelt gezeichneten Linie dargestellte und mit dem Bezugszeichen 7 versehene Zusammenfassung des Schwingers 3 und der Regelungs- und Auswerteeinheit 4 dargestellt.

Nachfolgend werden die Figuren 1 und 2 beschrieben.

Für einen Quarzresonator gilt dabei das in Figur 1 gezeigte Ersatzschaltbild. Dieses besagt, dass ein im linken Teil der Figur 1 dargestelltes und mit dem Bezugszeichen 1 versehenes Schaltsymbol für das Schwingungssystem - bestehend aus dem Schwinger 3 und dem angekoppelten Fluid 5 - einem Schwingsystem bestehend aus einem ersten und in der Figur 1 mit dem Bezugszeichen 100 versehenen Teil, welcher im folgenden auch als "Trockener Anteil" bezeichnet wird, und einem zweiten und in der Figur 1 mit dem Bezugszeichen 200 versehenen Teil, welcher im folgenden auch als "Flüssigkeitsanteil" oder "Fluidanteil" bezeichnet wird, entspricht.

Der trockene Anteil 100 und der Fluidanteil 200 sind in Figur 1 im Sinne einer Serienschaltung verbunden und im rechten Teil der Figur 1 hintereinander angeordnet. Der trockene Anteil 100 umfaßt hierbei einen Schwinger 3, dessen Verhalten sich beschreiben läßt durch eine erste Kapazität C₁, eine erste Induktivität L₁ und einen ersten Widerstand R1. Der Fluidanteil 200 umfaßt hierbei die an den Schwinger 3 angrenzende Fluidschicht bzw. den Anteil des Fluids, welcher durch die mechanischen Schwingungen des Schwingers beeinflußt wird. Das Verhalten der an den Schwinger 3 angekoppelten Fluidschicht bzw. des an den Schwinger 3 angekoppelten Anteils des Fluids läßt sich dabei durch eine zweite Induktivität L₂ und einen zweiten Widerstand R₂ beschreiben.

Der zweite Widerstand R₂ ist näherungsweise proportional zur Quadratwurzel aus dem Produkt der Dichte und der dynamischen Viskosität des Fluids bzw. der Flüssigkeit. Der zweite Widerstand R₂ repräsentiert die viskose Dämpfung durch die Flüssigkeit. Die zweite Induktivität L₂ bewirkt eine Frequenzverschiebung durch die viskose Flüssigkeit, wobei die zweite Induktivität L₂ bei rauhen Resonatoroberflächen auch Anteile umfaßt, die durch "gefangene" Flüssigkeitsanteile in der rauhen Resonatoroberfläche entstehen. Diese Frequenzverschiebung ist ebenfalls näherungsweise proportional zur Quadratwurzel aus dem Produkt der Dichte und der dynamischen Viskosität des Fluids bzw. der Flüssigkeit. Bei bekannter oder hinreichend konstanter Dichte kann der Resonator daher zur Bestimmung der (dynamischen) Viskosität verwendet werden. Zur Auswertung bzw. zur Messung ist es erfindungsgemäß vorgesehen, die verwendeten elektrischen Parameter durch Verwendung des Resonators als frequenzbestimmendes Element in einer bzw. durch eine Oszillatorschaltung zu erfassen.

Bei der Charakterisierung hochviskoser Flüssigkeiten steigt der zweite Widerstand R₂ stark an, so dass die Impedanz des Resonators auch in der Umgebung der Serienresonanzfrequenz im wesentlichen durch eine zur der seriellen Anordnung aus erster Kapazität C₁, erster Induktivität L₁, erstem Widerstand R₁, zweiter Induktivität L₂ und zweitem Widerstand R₂ parallel vorhandenen und mit dem Bezugszeichen C₀ versehenen Kapazität bestimmt wird. Diese Kapazität C₀ repräsentiert die elektrostatische Kapazität die durch die, zur Anregung der Schwingung auf dem Resonator aufgebrachten Elektroden dargestellt wird. Weitere, in der Figur 1 der Einfachheit halber nicht gezeigte sogenannte Streukapazitäten, die eben falls zur Kapazität Cₒ parallel liegen, können ebenfalls vorhanden sein. Die Streukapazitäten repräsentieren beispielsweise jene Kapazitäten, die durch die Zuleitungen zum Sensorelement dargestellt werden.
Bei hohen Widerstandswerten des zweiten Widerstands R₂, das heißt bei hohen Viskositäten der Flüssigkeit, wird die Gesamtimpedanz des Resonators auch in der Umgebung der Serienresonanzfrequenz im wesentlichen durch die Kapazität C0 (bzw. zusätzlich die Streukapazitäten) bestimmt, wodurch sich die Bestimmung der relevanten Ersatzparameter mittels einer Oszillatorschaltung erschwert.

Eine mögliche Abhilfe ist die Parallelschaltung einer Induktivität zur Kompensation der Kapazität C₀ bzw. zusätzlich der Streukapazitäten in der Umgebung der Serienresonanzfrequenz des Resonators. Der Nachteil hierbei ist zum einen der erforderliche Abgleich dieser zusätlichen (kompensierenden) Induktivität und zum anderen die üblicherweise schlechten Temperaturkoeffizienten bzw. Drifteigenschaften von induktiven Bauelementen.

Erfindungsgemäß ist eine Oszillatorschaltung vorgesehen, bei welcher der störende Einfluß der Kapazität C₀ durch die Verwendung einer Referenzkapazität C, die im folgenden auch als Korrekturkapazität C bezeichnet wird, unterdrückt wird. Im einfachsten Fall sollte diese Referenzkapazität C etwa dem Wert der Kapazität C₀ aufweisen. Vorteilhaft ist erfindungsgemäß die Kompensationsmöglichkeit der Kapazität C₀ ohne die Notwendigkeit einer abzustimmenden Induktivität und demnach der Wegfall aller damit verbundenen Nachteile.

In Figur 2 ist ein Blockschaltbild einer erfindungsgemäßen Oszillatorschaltung 2 dargestellt. Die Oszillatorschaltung 2 weist einen Verstärker V, ein erstes Rückkopplungsnetzwerk K₁, ein zweites Rückkopplungsnetzwerk K₂ und eine Verstärkungsregelungseinheit AGC auf. Der Verstärker V weist einen ersten Eingang 10, einen zweiten Eingang 11 und einen Ausgang 12 auf. Das erste Rückkopplungsnetzwerk K₁ weist einen Eingang 21 und einen Ausgang 22 auf. Das zweite Rückkopplungsnetzwerk K₂ weist einen Eingang 31 und einen Ausgang 32 auf. Die Verstärkungsregelungseinheit AGC weist einen Eingang 41 und einen Ausgang 42 auf. Der Ausgang 12 des Verstärkers V ist sowohl mit dem Eingang 21 des ersten Rückkopplungsnetzwerks K₁ als auch mit dem Eingang 31 des zweiten Rückkopplungsnetzwerks K₂ als auch mit dem Eingang 41 der Verstärkungsregelungseinheit AGC verbunden. Der Ausgang des ersten Rückkopplungsnetzwerks K₁ ist mit dem ersten Eingang 10 des Verstärkers verbunden. Der Ausgang des zweiten Rückkopplungsnetzwerks K₂ ist ebenfalls mit dem ersten Eingang 10 des Verstärkers verbunden. Erfindungsgemäß ist es insbesondere vorgesehen, dass der Ausgang 32 des zweiten Rückkopplungsnetzwerks K₂ derart mit dem ersten Eingang 10 des Verstärkers V verbunden ist, dass der Ausgang 32 des zweiten Rückkopplungsnetzwerks K₂ derart negativ auf den ersten Eingang 10 des Verstärkers V wirkt, dass am ersten Eingang 10 des Verstärkers V die Differenz der Ausgänge 22, 32 des ersten und zweiten Rückkopplungsnetzwerks K₁, K₂ anliegt. Dies ist in Figur 2 dadurch gekennzeichnet, dass in der Nähe der Zusammenführung der Signale der Ausgänge 22, 32 der Rückkopplungsnetzwerke K₁, K₂ der Ausgang 32 des zweiten Rückkopplungsnetzwerks K₂ mit einem Minuszeichen (-) bezeichnet ist.

Kern der Oszillatorschaltung 2 ist der Verstärker V und das Rückkopplungsnetzwerk K₁, welches den in der Figur 2 mit dem Bezugszeichen Q versehenen Resonator als frequenzbestimmendes Element enthält. Der Resonator Q ist erfindungsgemäß insbesondere als Quarz vorgesehen und wird im folgenden auch als Quarz Q bezeichnet. Der Übertragungsfaktor des Rückkopplungsnetzwerks K₁ ist typischerweise so beschaffen, dass er in der Nähe der Serienresonanzfrequenz des Quarzes Q ein betragsmäßiges Maximum aufweist. Gleichzeitig sollte in der Nähe dieses Punktes vorteilhafterweise die Phasenbedingung für die Oszillation erfüllt sein, d.h. es sollte gelten, dass die Summe der Phasen des ersten Rückkopplungsnetzwerks K₁ und des Verstärkers V ein Vielfaches von 360° ergeben. Die zuletzt genannten Bedingungen können durch entsprechendes Design der Schaltungsblöcke des ersten Rückkopplungsnetzwerks K₁, des zweiten Rückkopplungsnetzwerks K₂ und des Verstärkers V erfüllt werden.

Die Oszillation erfolgt bei der Frequenz ω, bei der die Schwingbedingung erfüllt ist; im Fall der in Figur 2 gezeigten Anordnung bedeutet dies, dass das Produkt aus dem Übertragungsfaktor des Verstärkers V, multipliziert mit der Differenz, welche sich aus dem Übertragungsfaktor des ersten Rückkopplungsnetzwerks K₁ abzüglich des Übertragungsfaktors des zweiten Rückkopplungsnetzwerks K₂ ergibt, gerade 1 ergeben muß. Die Übertragungsfaktoren der Funktionsblöcke der Oszillatorschaltung 2 sind hierbei als komplexwertige Übertragungsfaktoren zu sehen, weshalb sich diese Schwingbedingung in eine Amplitudenbedingung und eine Phasenbedingung aufspalten läßt.

Durch die Verstärkungsregelungseinheit AGC kann die Amplitudenbedingung bei der durch die Phasenbedingung vorgegebenen Oszillationsfrequenz erfüllt werden. Die Verstärkungsregelungseinheit AGC umfaßt beispielhaft insbesondere einen in Figur 2 der Einfachheit halber nicht dargestellten Funktionsblock zur Erfassung der Schwingungsamplitude eines ersten und in der Figur 2 mit dem Bezugszeichen FS bezeichneten Ausgangssignals der Oszillatorschaltung 2, welches erfindungsgemäß insbesondere dem Ausgangssignal des Verstärkers V entspricht. Dieser Funktionsblock in der Verstärkungsregelungseinheit AGC zur Erfassung der Schwingungsamplitude ist insbesondere als Gleichrichterschaltung ausgeführt. Weiterhin umfaßt die Verstärkungsregelungseinheit AGC beispielhaft insbesondere einen in Figur 2 der Einfachheit halber nicht dargestellten Regler, welcher über den Ausgang 42 der Verstärkungsregelungseinheit AGC und den zweiten Eingang 11 des Verstärkers V die Verstärkung im Verstärker V so einstellt, dass sich eine konstante Schwingungsamplitude ergibt. Dem Ausgang 42 der Verstärkungsregelungseinheit AGC entspricht ein zweites und in Figur 2 mit dem Bezugszeichen VS bezeichnetes Ausgangssignal der Oszillatorschaltung 2.

Erfindungsgemäß ist es das Ziel, bei der Regelung durch die Oszillationsschaltung, eine Oszillation bei der durch die zu messende Impedanz bestimmte Serienresonanzfrequenz herbeizuführen, wobei die zu messende Impedanz durch die in Figur 1 dargestellte Serienschaltung aus erster Induktivität L₁, erster Kapazität C₁, erstem Widerstand R₁, zweiter Induktivität L₂ und zweitem Widerstand R₂ gegeben ist. Die Oszillatorfrequenz, welche bei erfolgter Kompensation im wesentlichen durch die Induktivitäten L₁ und L₂ und die erste Kapazität C₁ bestimmt ist und für die das erste Ausgangssignal FS ein Maß ist, kann dann zur Bestimmung der zweiten Induktivität L₂ verwendet werden. Da der zweite Widerstand R₂, der im folgenden auch als Verlustwiderstand R₂ bezeichnet wird, die Dämpfung des ersten Rückkopplungssnetzwerks K₁ bestimmt, kann er indirekt durch das zur Herbeiführung der Oszillation notwendige, die Verstärkung bestimmende, zweite Ausgangssignal VS der Oszillationsschaltung, welches im folgenden auch als Verstärkungssignal VS bezeichnet wird, bestimmt werden. Da beide Größen, die erste Induktivität L₂ und der zweite Widerstand R₂, durch das Produkt aus (dynamischer) Viskosität und Dichte des Fluids bestimmt werden, können die Ausgangssignale FS und VS zur Bestimmung dieser Flüssigkeitseigenschaften herangezogen werden.

Ohne Anwesenheit des zweiten Rückkopplungssnetzwerks K₂ würde die frequenzbestimmende Phasenbedingung jedoch maßgeblich von der Kapazität C₀ beeinflußt, die im folgenden auch als statische Kapazität C₀ bezeichnet wird. Dies gilt insbesondere bei großen Verlustwiderständen R₂ welche den Serienresonanzzweig sehr hochohmig machen. Somit führt die statische Kapazität C₀ bei der Gesamtimpedanz des Schwingersystems zu einem Phasenfehler im Frequenzgang des ersten Rückkopplungssnetzwerks K₁, wodurch sich die Schwingungsfrequenz von der gewünschten Serienresonanzfrequenz entfernt bzw. die Schwingung im Extremfall sogar abreißt. Mit der Abweichung von der Serienresonanzfrequenz kann auch nicht mehr fehlerfrei von dem zweiten Ausgangssignal VS, welches von der Verstärkungsregelungseinheit AGC geliefert wird, auf den Verlustwiderstand R₂ geschlossen werden. Kompensiert werden könnte die statische Kapazität C₀ zwar durch eine Parallelinduktivität; es wären jedoch schwerwiegende Nachteile damit verbunden, wie zum Beispiel:
- Induktivitäten sind schwer abstimmbar und nur unter großen Fertigungstoleranzen herstellbar;
- Induktivitätswerte von Spulen driften und weisen Temperaturabhängigkeiten auf;
- die Kompensation erfolgt nur bei der Parallelresonanzfrequenz, gegeben durch die statische Kapazität C₀ und die parallelgeschaltete Induktivität.

Die erfindungsgemäße Kompensationsmethode der statischen Kapazität C₀ (und evtl. vorhandener parallel dazu vorhandener Streukapazitäten) basiert auf der Annahme, dass das erste Rückkopplungssnetzwerk K₁ eine Übertragungsfunktion aufweist, die zumindest näherungsweise proportional ist zum Inversen der Impedanz des Quarzes Q. In diesem Fall kann der Anteil der statischen Kapazität C₀ durch das im Blockschaltbild parallel zum ersten Rückkopplungssnetzwerk K₁ angeordnete zweite Rückkopplungssnetzwerks K₂ kompensiert werden, indem die Ausgangssignale des ersten Rückkopplungssnetzwerks K₁ und des zweiten Rückkopplungssnetzwerks K₂,wie in Figur 2 gezeigt, subtrahiert werden. Werden die Rückkopplungssnetzwerke K₁, K₂ identisch gewählt, so muss für eine vollständige Kompensation der statischen Kapazität C₀ die Korrekturkapazität C auf den Wert der statischen Kapazität C₀ gesetzt werden. Die Funktionalität des zweiten Rückkopplungssnetzwerks K₂ ist mit derjenigen des ersten Rückkopplungssnetzwerks K₁ vergleichbar insofern als, dass auch das zweite Rückkopplungssnetzwerk K₂ eine Übertragungsfunktion aufweist, welche im wesentlichen proportional zum Inversen einer Impedanz ist, nämlich der Impedanz der Korrekturkapazität C.

Anstelle des genauen Abgleichs der Korrekturkapazität C auf den für die optimale Kompensation benötigten Wert kann die Kompensation vorteilhafterweise auch durch Variation von anderen Parametern, die den Übertragungsfaktor des zweiten Rückkopplungsnetzwerks K₂ beeinflussen, wie zum Beispiel Verstärkungsfaktoren, erfolgen.

Eine vorteilhafte schaltungstechnische Ausführung der erfindungsgemäßen Oszillationsschaltung bzw. der erfindungsgemäßen Vorrichtung 7 verwendet bezüglich Masse - d.h. das Bezugspotential der Oszillationsschaltung, welches in Figur 2 der Einfachheit halber nicht dargestellt ist - symmetrische Signale, wodurch die Subtraktion der Ausgangssignale 22, 32 der Rückkopplungssnetzwerke K₁, K₂ durch "Auskreuzen" der Signalleitungen erfolgen kann. Die Ausführung der Ausgänge 22, 32 der Rückkopplungssnetzwerk K₁, K₂ in Form von sogenannten Stromausgängen kann zudem eine einfache Ausführung des Additionsknotens ermöglichen, welcher in Figur 2 mit einem Pluszeichen (+) in einem Kreis bei der Zusammenführung der Ausgänge 22, 32 der Rückkopplungssnetzwerke K₁, K₂ zum Eingang 10 des Verstärkers dargestellt ist. Eine ebensolche Ausführung der Ausgänge 22, 32 in Form von Stromausgängen ermöglicht es alternativ auch, die erfindungsgemäße Subtraktion des Ausgangssignals des zweiten Rückkopplungssnetzwerks K₂ von Ausgangssignal des ersten Rückkopplungssnetzwerks K₁ mittels eines nicht dargestellten Subtraktionsknotens (anstelle des Additionsknotens) durchzuführen.

## Patentansprüche

1. Vorrichtung (7) zur Messung der Viskosität und/oder der Dichte eines Fluids (5) mittels eines zu mechanischen Schwingungen fähigen Schwingers, wobei der Schwinger mit dem Fluid (5) in Kontakt bringbar vorgesehen ist,
wobei mit dem Schwinger eine Oszillatorschaltung (2) verbunden ist, welche
- ein erstes Rückkopplungsnetzwerk (K₁) und
- ein zweites Rückkopplungsnetzwerk (K₂)
aufweist,
**dadurch gekennzeichnet dass**
- das erste Rückkopplungsnetzwerk (K₁) einen als Sensorelement fungierenden Resonator (Q) als frequenzbestimmendes Element und
- das zweite Rückkopplungsnetzwerk (K₂) eine Korrekturkapazität (C) als frequenzbestimmendes Element zur kompensation einer zur Messimpedanz parallelliegenden kapazität
aufweist.

2. Vorrichtung (7) nach Anspruch 1, **dadurch gekennzeichnet dass** das zweite Rückkopplungsnetzwerk (K₂) parallel zum ersten Rückkopplurigsnetzwerk (K₁) angeordnet ist.

3. Vorrichtung (7) nach einem der vorhergehenden Ansprüche, **dadurch gekennzeichnet, dass** die Vorrichtung (7) einen Verstärker (V) aufweist, dass der Verstärker (V) einen ersten Eingang (10) aufweist und dass dem ersten Eingang (10) des Verstärkers (V) ein Ausgang (22) des ersten Rückkopplungsnetzwerks (K₁) und ein Ausgang (32) des zweiten Rückkopplungsnetzwerk (K₂) zugeführt ist, wobei dem ersten Eingang (10) des Verstärkers (V) die Differenz der Ausgänge (22, 32) der Rückkopplungsnetzwerke (K₁, K₂) zugeführt ist.

4. Vorrichtung (7) nach Anspruch 3, **dadurch gekennzeichnet, dass** der Verstärker (V) einen Ausgang (12) aufweist, wobei der Verstärkerausgang (12) mit einem Eingang (21) des ersten Rückkopplungsnetzwerks (K₁) und mit einem Eingang (31) des zweiten Rückkopplungsnetzwerks (K₂) verbunden ist.

5. Vorrichtung (7) nach Anspruch 4, **dadurch gekennzeichnet, dass** der Verstärkerausgang (12) einem ersten Ausgangssignal (FS) der Oszillatorschaltung (2) entspricht.

6. Vorrichtung (7) nach einem der Ansprüche 4 oder 5, **dadurch gekennzeichnet, dass** die Vorrichtung (7) eine Verstärkungsregelungseinheit (AGC) umfaßt, wobei die Verstärkungsregelungseinheit (AGC) einen Eingang (41) umfaßt, wobei der Verstärkerausgang (12) mit dem Eingang (41) der Verstärkungsregelungseinheit (AGC) verbunden ist.

7. Vorrichtung (7) nach Anspruch 6, **dadurch gekennzeichnet, dass** der Verstärker (V) einen zweiten Eingang (11) aufweist und dass die Verstärkungsregelungseinheit (AGC) einen Ausgang (42) aufweist, wobei der Ausgang (42) der Verstärkungsregelegungseinheit (AGC) mit dem zweiten Eingang (11) des Verstärkers (V) verbunden ist.

8. Vorrichtung (7) nach Anspruch 6 oder 7, **dadurch gekennzeichnet, dass** der Ausgang (42) der Verstärkungsregetungseinheit (AGC) einem zweiten Ausgangssignal (VS) der Oszillatorschaltung (2) entspricht.

## Claims

1. Device (7) for measuring the viscosity and/or density of a fluid (5) using an oscillator which is capable of mechanical oscillations, the oscillator being provided such that it can be brought into contact with the fluid (5),
an oscillator circuit (2) which has
- a first feedback network (K₁) and
- a second feedback network (K₂)
being connected to the oscillator,
**characterized in that**
- the first feedback network (K₁) has a resonator (Q), which acts as a sensor element, as a frequency-determining element, and
- the second feedback network (K₂) has a correction capacitance (C) as a frequency-determining element for compensating for a capacitance parallel to the measuring impedance.

2. Device (7) according to Claim 1, **characterized in that** the second feedback network (K₂) is arranged parallel to the first feedback network (K₁).

3. Device (7) according to one of the preceding claims, **characterized in that** the device (7) has an amplifier (V), **in that** the amplifier (V) has a first input (10), and **in that** an output (22) of the first feedback network (K₁) and an output (32) of the second feedback network (K₂) are supplied to the first input (10) of the amplifier (V), the difference between the outputs (22, 32) of the feedback networks (K₁, K₂) being supplied to the first input (10) of the amplifier (V).

4. Device (7) according to Claim 3, **characterized in that** the amplifier (V) has an output (12), the amplifier output (12) being connected to an input (21) of the first feedback network (K₁) and to an input (31) of the second feedback network (K₂).

5. Device (7) according to Claim 4, **characterized in that** the amplifier output (12) corresponds to a first output signal (FS) from the oscillator circuit (2).

6. Device (7) according to either of Claims 4 and 5, **characterized in that** the device (7) comprises a gain control unit (AGC), the gain control unit (AGC) comprising an input (41), the amplifier output (12) being connected to the input (41) of the gain control unit (AGC).

7. Device (7) according to Claim 6, **characterized in that** the amplifier (V) has a second input (11), and **in that** the gain control unit (AGC) has an output (42), the output (42) of the gain control unit (AGC) being connected to the second input (11) of the amplifier (V).

8. Device (7) according to Claim 6 or 7, **characterized in that** the output (42) of the gain control unit (AGC) corresponds to a second output signal (VS) from the oscillator circuit (2).

## Revendications

1. Dispositif (7) de mesure de la viscosité et/ou de la densité d'un fluide (5) au moyen d'un oscillateur capable d'entrer en oscillation mécanique, l'oscillateur pouvant être mis en contact avec le fluide (5),
un circuit oscillant (2) qui présente
- un premier réseau de rétroaction (K₁) et
- un deuxième réseau de rétroaction (K₂) étant relié à l'oscillateur,
**caractérisé en ce que**
- le premier réseau de rétroaction (K₁) présente comme élément de définition de la fréquence un résonateur (Q) fonctionnant comme élément de détection
et
- le deuxième réseau de rétroaction (K₂) présente comme élément de définition de la fréquence une capacité correctrice (C) qui sert à compenser une capacité parallèle à l'impédance de mesure.

2. Dispositif (7) selon la revendication 1, **caractérisé en ce que** le deuxième réseau de rétroaction (K₂) est disposé parallèlement au premier réseau de rétroaction (K₁).

3. Dispositif (7) selon l'une des revendications précédentes, **caractérisé en ce que** le dispositif (7) présente un amplificateur (V), **en ce que** l'amplificateur (V) présente une première entrée (10) et **en ce qu'**une sortie (22) du premier réseau de rétroaction (K₁) et une sortie (32) du deuxième réseau de rétroaction (K₂) sont amenées à la première entrée (10) de l'amplificateur (V), la différence entre les sorties (22, 32) des réseaux de rétroaction (K₁, K₂) étant amenée à la première entrée (10) de l'amplificateur (V).

4. Dispositif (7) selon la revendication 3, **caractérisé en ce que** l'amplificateur (V) présente une sortie (12), la sortie (12) de l'amplificateur étant reliée à une entrée (21) du premier réseau de rétroaction (K₁) et à une entrée (31) du deuxième réseau de rétroaction (K₂).

5. Dispositif (7) selon la revendication 4, **caractérisé en ce que** la sortie (12) de l'amplificateur correspond à un premier signal de sortie (FS) du circuit oscillant (2).

6. Dispositif (7) selon l'une des revendications 4 ou 5, **caractérisé en ce que** le dispositif (7) comporte une unité (AGC) de régulation de l'amplification, l'unité (AGC) de régulation de l'amplification comportant une entrée (41) et la sortie (12) de l'amplificateur étant reliée à l'entrée (41) de l'unité (AGC) de régulation de l'amplification.

7. Dispositif (7) selon la revendication 6, **caractérisé en ce que** l'amplificateur (V) présente une deuxième entrée (11) et **en ce que** l'unité (AGC) de régulation de l'amplification présente une sortie (42), la sortie (42) de l'unité (AGC) de régulation de l'amplification étant reliée à la deuxième entrée (11) de l'amplificateur (V).

8. Dispositif (7) selon les revendications 6 ou 7, **caractérisé en ce que** la sortie (42) de l'unité (AGC) de régulation de l'amplification correspond à un deuxième signal de sortie (VS) du circuit oscillant (2).
